# EUROPEAN PATENT APPLICATION

(11) **EP 4 030 025 A1**
(43) Date of publication of application: **20.07.2022**
(21) Application number: 20862901.4
(22) Date of filing: 05.08.2020
(51) Int. Cl.: E05B 85/16, B60J 5/04

(54) **VEHICULAR HANDLE DEVICE**

(30) Priority: 11.09.2019 JP 2019165090
(71) Applicant: Alpha Corporation, Yokohama-shi, Kanagawa 236-0004 (JP)
(72) Inventor: TOYAMA, Takao, Yokohama-shi, Kanagawa 236-0004 (JP); ONO, Takashi, Yokohama-shi, Kanagawa 236-0004 (JP)
(74) Representative: Daub, Thomas
(86) International application number: PCT/JP2020/030016
(87) International publication number: WO 2021/049214

(57) **Abstract**

This vehicular handle device comprises a handle body, a handle base, a door latch device in a door, an electric actuator, and an extracting member. The handle body is configured so as to be driven from an initial position, where the handle body has been stored in the handle base by the electric actuator, up to a popup position, and to be manually operated up to a latch operation position exceeding the popup position, whereby the door latch device in the door is unlocked.

## Description

### TECHNICAL FIELD

The present invention relates to a vehicular handle device.

### BACKGROUND ART

Patent Literature 1 discloses a handle device having a flash surface specification in which a handle body is accommodated in an accommodation recess formed in a door when not in use.

The handle device of Patent Literature 1 includes a cam that is rotationally driven by a motor, a rocker arm that operates as a follower of the cam and is rotatable about a rocker shaft positioned parallel to a rotation center of the cam, and a handle (handle body) that is rotatable about pivot means positioned perpendicular to the rocker shaft.

When the rocker arm is rotated by rotation of the cam, an operating member protruding from the handle body is pushed, and the handle body rotates around the pivot means and protrudes from a handle surface.

The cam is an eccentric disc cam, and the rocker arm following the eccentric disc cam is rotationally driven with a small rotation angle at an initial stage of rotation and then while increasing an amount of increase in the rotation angle per unit angle of the cam. As a result, since the handle body is driven by a large driving force at the initial stage of rotation, an effective crushing operation is performed even when a periphery of the handle body freezes in winter.

### CITATION LIST

### PATENT LITERATURE

Patent Literature 1: JP2014-522926A

In the handle device of Patent Literature 1, since the handle body is rotationally driven around the pivot means, in order to crush ice by rotating the handle body, since it is necessary to crush ice at a free end of the handle body which is farthest from a rotation axis of the handle body, a large torque is required for crushing.

### SUMMARY OF INVENTION

### TECHNICAL PROBLEM

According to an embodiment of the present invention, a vehicular handle device can crush ice with a small power.

According to the embodiment of the present invention, a vehicular handle device includes a handle body 3, a handle base 2, a door latch device 4 in a door, an electric actuator 1, and a pushing member 5. The handle body 3 is configured to be driven by the electric actuator 1 from an initial position, in which the handle body 3 is accommodated in the handle base 2, to a pop-up position, and manually operated to a latch operation position beyond the pop-up position, thereby unlocking the door latch device 4 in the door. The pushing member 5 is configured to be rotationally driven by the electric actuator 1 and push an end of the handle body 3 on a side where the electric actuator 1 is arranged in a protruding direction from the handle base 2 by an operation force in which an amount of change in a pushing amount is small at an initial stage of operation and the amount of change gradually increases at a later stage of the operation.

In the present invention, at an initial stage of moving the handle body 3 from the initial position in which the handle body 3 is accommodated in the handle base 2 to the pop-up position, an operation force directed in a direction in which the handle body protrudes from the handle base 2 is applied to an end of an operation handle on a side where the electric actuator 1 is disposed.

In a case of moving an operation handle, whose peripheral edge is frozen, from the initial position to the pop-up position, in order to crush ice by applying a torque to one end of the operation handle having a cantilever shape as shown in the related art, first, it is necessary to crush ice on an end portion of the operation handle, the end portion being opposite to a rotation center and to be displaced with a maximum movement amount, and for a torque for this purpose, an arm length of the operation handle is an important factor.

In contrast, in the presently disclosed subject matter in which an end of the handle body on a side on which the electric actuator 1, that is, a power source, is provided, is driven in the protruding direction, since the arm length is not important for a force required for crushing the ice, it is generally possible to break the ice with a small operation force.

Further, since the amount of change in the pushing amount in the protruding direction, that is, a pushing speed, is set to be small at the initial stage and to be large at the later stage of the operation, even when the same drive source is used, the operation force is large at the initial stage, that is, at the time of crushing the ice, and thus efficient crushing of the ice is performed.

Therefore, in the present invention, it is possible to efficiently crush ice on the handle body 3 in winter.

As long as the pushing member 5 can move the end of the handle body 3 on the side where the electric actuator 1 is arranged, in a direction protruding from the handle base 2, something similar to a cam 6, for example, can be used as a pushing member, or the pushing member 5 can also be configured as a link.

In the vehicular handle device, one end of the pushing member 5 may be rotatably connected to the handle base 2, and the pushing member 5 may configured to be rotationally driven by being pushed by the cam 6 being rotationally driven by the electric actuator 1. The cam 6 may be formed in a shape having a cam diagram in which an increase rate of a movement amount in the protruding direction of the other end of the pushing member per unit rotation angle of the cam, the other end of the pushing member being opposite to the one end of the pushing member 5 connected to the handle base 2, is small at an initial stage of rotation of the cam and increases as the rotation proceeds to a later stage.

In this aspect, one end of the pushing member 5 is rotatably connected to the handle base 2 and the pushing member 5 is pushed and rotationally driven by the cam 6, and the other end of the pushing member 5 pushes the end of the handle body 3 on the side where the actuator is arranged in the protruding direction.

By setting the cam diagram of the cam 6 such that the increase rate of the movement amount in the protruding direction of the opposite end of the pushing member is small at the initial stage of rotation and increases as the rotation proceeds to the later stage, a pushing force to the handle body 3 can be increased at the initial stage of operation.

The pushing member 5 may be configured as a pushing link for pushing the handle body 3, or may be configured as a part of a link mechanism.

The vehicular handle device may further include an operation link 7. One end of the operation link 7 may be rotatably connected to one end of the handle body 3, and the other end of the operation link 7 may be rotatably connected to the handle base 2. The one end of the pushing member 5 may be rotatably connected to the handle base 2, and the other end of the pushing member 5 may be rotatably connected to the other end of the handle body 3. The pushing member 5 may form a link mechanism together with the operation link 7, the handle body 3, and the handle base 2.

In this aspect, when the pushing member 5 is rotationally driven by the electric actuator 1 such as a motor, the handle body 3, which is connected to the operation link 7 at one end and the pushing member 5 at the other end and forms the link mechanism as a whole, moves from the initial position to the pop-up position. Thereafter, when the handle body 3 is further operated and moved to the latch operation position, the door latch device 4 operates.

The link mechanism can be configured as a four-joint link mechanism by the handle base 2, the pushing member 5, the operation link 7, and the handle body 3, and in this case, a latch release operation of the door latch device 4 can be performed by manually pulling out the handle body 3 having been driven to the pop-up position by the electric actuator 1 to the latch operation position.

When the four-joint link mechanism is configured as a parallel link mechanism, the handle body 3 moves in parallel from the initial position, and thus usability is improved.

When the driving by the electric actuator 1 is started, a connection point between the handle body 3 and the pushing member 5 moves in the direction protruding from the handle base 2. The other end of the handle body 3, which is a link element of the link mechanism, also moves in the protruding direction in accordance with the movement of the pushing member 5. In this case, since the entirety of the handle body 3 moves in the protruding direction, the handle body 3 acts as a shear force against the ice, and it is not necessary to consider an action due to the arm length as in the related art, so that an ice crushing efficiency is increased.

In a case of considering an operation as a link, first, an operation force acts on the connection point between the pushing member 5 and the handle body 3. Since the handle body 3 does not move due to freezing and there is a clearance or backlash at each connection point, a force in the protruding direction is applied substantially only to the connection point between the pushing member 5 and the handle body 3. Once the ice is broken at this connection point, the ice is sequentially crushed along with propagation of a crack generated at the connection point, and thus an efficient ice crushing operation can be expected.

In the vehicular handle device, a rotation center of the cam 6 may be disposed near a normal line at a contact portion at which the cam 6 and the pushing member 5 contact each other when the pushing member 5 is at a pop-up corresponding position corresponding to the pop-up position of the handle body 3. Even if a load toward the initial position, that is, a force for pressing the handle body 3, is applied to the handle body 3 when the handle body 3 is at the pop-up corresponding position, a rotational operation force to the cam 6 can be reduced.

That is, in a case where the force for pressing the handle body 3 is applied when the handle body 3 is at the pop-up corresponding position, since only a force directed toward the rotation center is generally applied to the cam 6 and a force in a direction perpendicular to the force, that is, the rotational operation force to the cam 6 is reduced, a force applied to a worm from a worm wheel can be reduced.

In the vehicular handle device, a connection portion between the operation link 7 and the handle body 3 may have a sliding pair. The handle body 3 may be configured to move from the pop-up position to the latch operation position by a rotation operation of the handle body 3 about a rotation center of the handle body 3 and the pushing member 5.

According to the embodiment of the present invention, it is possible to crush the ice with a small power.

### BRIEF DESCRIPTION OF DRAWINGS

[Fig. 1] Fig. 1 is a front view of a handle device.
[Fig. 2] Fig. 2 is a rear view of the handle device.
[Fig. 3] Fig. 3 is a cross-sectional view taken along a line 3A-3A of Fig. 1.
[Figs. 4] Fig. 4(a) shows power transmission of an electric actuator in a drive source of a pushing member. Fig. 4(b) shows a cam in the drive source of the pushing member. Fig. 4(c) shows a diagram of the cam in the drive source of the pushing member.
[Figs. 5] Fig. 5(a) shows a state in which the pushing member is at an initial corresponding position in an operation of the cam. Fig. 5(b) shows a state between the initial corresponding position and a pop-up corresponding position in the operation of the cam. Fig. 5(c) shows the pop-up corresponding position in the operation of the cam.
[Figs. 6] Fig. 6(a) shows a pop-up position of a handle body in an operation of a handle. Fig. 6(b) shows a latch operation position in the operation of the handle.
[Figs. 7] Fig. 7(a) is an enlarged view of a main part of Fig. 2 in a latch release lever. Fig. 7(b) is a view taken in a direction of an arrow 7B in Fig. 7(a). Fig. 7(c) is a view of the latch release lever as viewed from a direction of an arrow 7C in Fig. 7(b).
[Figs. 8] Fig. 8(a) is a view taken in a direction of an arrow 8A in Fig. 8(b). Fig. 8(b) is a perspective view.
[Figs. 9] Fig. 9(a) is a view taken in a direction of an arrow 9A in Fig. 9(d) showing a lever push member. Fig. 9(b) is a cross-sectional view taken along a line 9B-9B of Fig. 9(a). Fig. 9(c) is a cross-sectional view taken along a line 9C-9C of Fig. 9(a). Fig. 9(d) is a perspective view of the lever push member.
[Figs. 10] Fig. 10(a) is a cross-sectional view taken along a line 10A-10A of Fig. 7(b). Fig. 10(b) is a cross-sectional view taken along a line 10B-10B of Fig. 7(b). Fig. 10(c) is a view corresponding to Fig. 10(a) when an operation arm is at an intermediate position between the initial corresponding position and the pop-up corresponding position. Fig. 10(d) is a view corresponding to Fig. 10(a) when the operation link is at the pop-up correspondence position. Fig. 10(e) is a view corresponding to Fig. 10(b) when the operation link is at the pop-up correspondence position.
[Figs. 11] Fig. 11(a) shows a non-operating state in an operation of an inertia stopper. Fig. 11(b) shows a state in which the inertia stopper is rotated to a stopper rotated position by an impact load in the operation of the inertia stopper.

### DESCRIPTION OF EMBODIMENTS

A door handle device includes a handle base 2, a handle body 3, a pushing member 5 connecting the handle body 3 to the handle base 2, and an operation link 7, and is to be fixed to a door of a vehicle at the handle base 2.

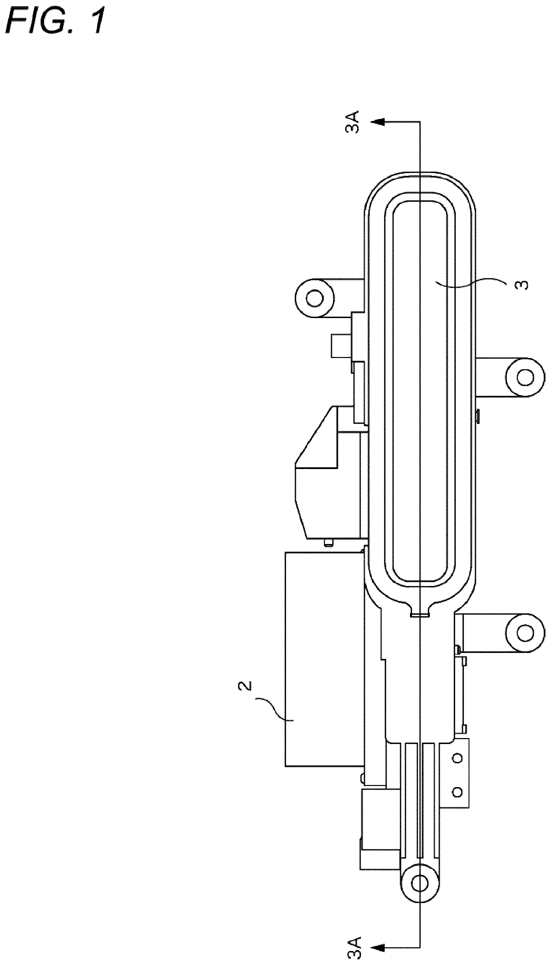

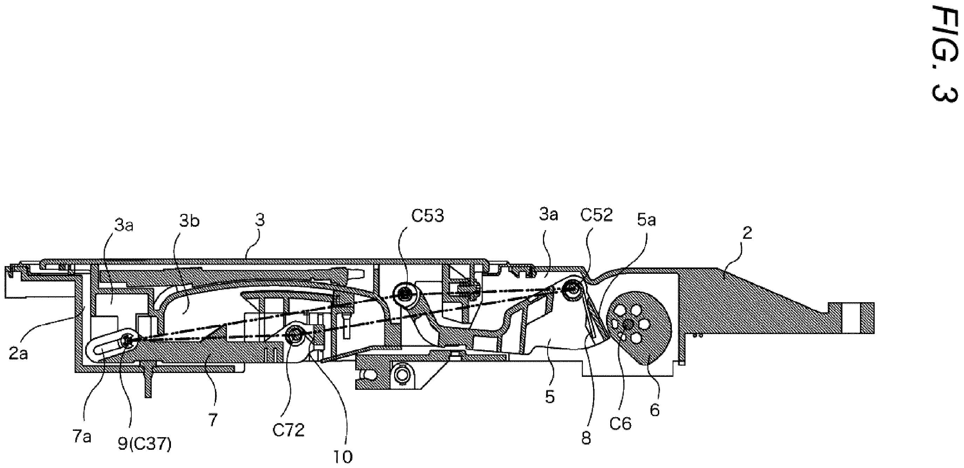

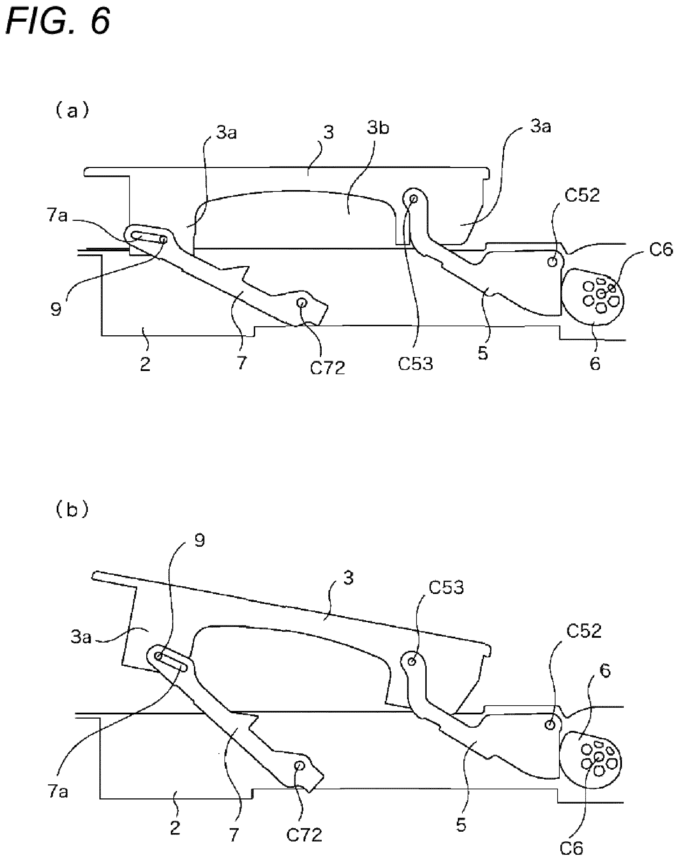

With the handle base 2 fixed to the door, the handle body 3 can be moved from an initial position shown in Figs. 1 and 3 to a pop-up position shown in Fig. 6(a) and a latch operation position at which one end of the handle body 3 is pulled up from the pop-up position as shown in Fig. 6(b).

The door handle device has a flush surface specification in which the handle body 3 is accommodated in the door and a surface of the handle body 3 is substantially in the same plane as a door surface when not in use. The initial position of the handle body 3 corresponds to a non-use posture. The handle base 2 is formed with a handle accommodating recess 2a to accommodate the handle body 3 when the hand body 3 is at the initial position (see Fig. 3).

As shown in Fig. 3, the pushing member 5 and the operation link 7 are connected to the handle base 2 so as to be rotatable about rotation centers C52 and C72. The rotation centers C52 and C72 of the pushing member 5 and the operation link 7 with respect to the handle base 2 are appropriately spaced apart from each other in a front-rear direction, that is, in a longitudinal direction of the handle base 2, and the rotation center C52 of the pushing member 5 is disposed in front of the rotation center C72 of the operation link 7.

In this description, a left side of Fig. 1 is referred to as "front", a right side is referred to as "rear", a direction directed out of the page of Fig. 1 is referred to as a "front surface" direction, and an opposite direction thereof is referred to a "back surface" direction.

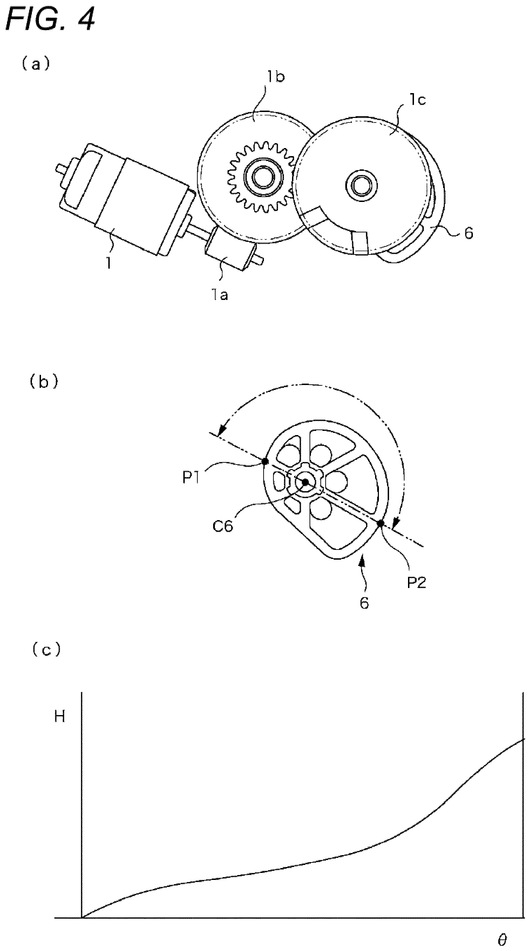

An electric actuator 1, such as a motor, is to be fixed to the handle base 2, and as shown in Fig. 4(a), power of the motor is transmitted to a cam 6 rotatably connected to the handle base 2 via a worm 1a, a worm wheel 1b, and a reduction gear 1c.

A pressed portion 5a is formed on the pushing member 5 so as to correspond to the cam 6 to be rotationally driven around a rotation center C6 and is pushed by the cam 6, and thus the pushing member 5 rotates about the rotation center C6 from an initial corresponding position corresponding to the initial position of the handle body 3 to a pop-up corresponding position corresponding to the pop-up position of the handle body 3 in accordance with rotation of the cam 6.

In order to ensure the contact of the pressed portion 5a with the cam 6, a torsion spring 8 is mounted around the rotation center C52 of the handle base 2 and the pushing member 5, to bias the pushing member 5 counterclockwise in Fig. 3.

As shown in Fig. 4(b), the cam 6 comes into contact with the pressed portion 5a at a start point P1 when the handle body 3 is at the initial position, and rotates counterclockwise by an angle θ about the rotation center C6 in Fig. 4(b) while maintaining the contact with the pressed portion 5a When the cam 6 comes into contact with the pressed portion 5a at an end point P2, the handle body 3 moves to the pop-up position.

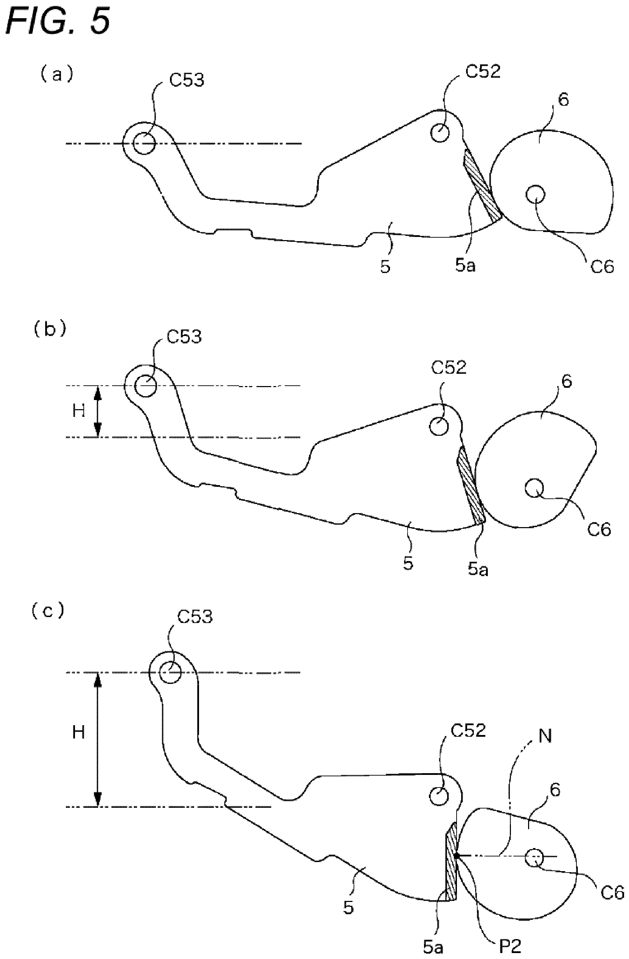

Figs. 5(a) to 5(c) are explanatory views showing a state in which the pushing member 5 is operated by the cam 6. Fig. 5(a) shows a state in which the pushing member 5 is at the initial corresponding position, Fig. 5(c) shows a state in which the pushing member 5 is at the pop-up corresponding position, and Fig. 5(b) shows a state in which the pushing member 5 is on the way from the initial corresponding position to the pop-up corresponding position. A reference numeral H shown in Figs. 5(b) and 5(c) denotes a movement amount of a connection point C52 with the handle body 3. Fig. 4(c) is a cam diagram of the cam 6 for obtaining the movement amount. A horizontal axis represents a rotation angle θ of the cam 6, and a vertical axis represents the movement amount H in a height direction of the connection point C52 with the handle body 3.

As shown in Fig. 4(c), the cam 6 is configured such that an increment in a movement length of the connection point C52 of the pushing member 5 with the handle body 3 in a height direction per unit angle of the cam 6 is small in an initial stage of rotation and gradually increases as the cam 6 approaches the end point. Immediately after starting to be driven by the motor 1, the cam 6 slowly ascends in a vertical direction, and is driven so as to gradually increase an ascending speed as the handle body 3 approaches the pop-up position.

As a result, a driving force is maximized at an initial stage of driving where the ascending speed is low, that is, when the handle body 3 starts to move from the initial position. By virtue of this configuration, for example, even when thin ice is formed around the handle body 3, it is possible to expect a sufficient driving force for crushing the ice and prevent an operation failure due to freezing.

When the handle body returns from the pop-up position to the initial position, since a descending speed decreases toward the initial position, it is possible to prevent a collision with the handle base 2, packing, or the like, and it is possible to prevent an occurrence of collision noise, rebound, or the like.

Further, as shown in Fig. 5(c), when the pushing member 5 is at the pop-up corresponding position, the rotation center C6 of the cam 6 is disposed near a normal line N drawn down from a contact point P2 with the pressed portion 5a. Therefore, a horizontal component when a force is applied from the pressed portion 5a to the contact point P2 of the cam 6, that is, a force to rotate the cam 6, is small.

Therefore, even if a load toward the initial position, that is, a force for pushing the handle body 3 is applied to the handle body 3 when the handle body 3 is at the pop-up corresponding position, only a force directed toward the rotation center C6 is generally applied to the cam 6, and a force in a direction perpendicular to the force is small. Therefore, a rotational operation force applied to the cam 6 is small, and a force applied to a worm from a worm wheel can be small.

As shown in Figs. 3, 6(a), and 6(b), the handle body 3 is provided with link connection portions 3a protruding toward a back-surface side and provided at both front and rear end portions of the handle body, and a handhold recess 3b serving as a handhold when the handle body 3 is operated is formed between the front and rear link connection portions 3a.

The other end of the pushing member 5, which is connected to the handle base 2 at one end, is rotatably connected to the front link connection portion 3a of the handle body 3, and the other end of the operation link 7 is connected to the rear link connection portion 3a.

The connection between the operation link 7 and the handle body 3 is rotatable and slidable. In this example, a connection pin 9 that is fixed to the rear link connection portion 3a and provides a rotation center C37 is inserted into a long hole 7a formed in an end portion of the operation link 7, and thus the connection pin 9 is slidable. The connection pin 9 is inserted into the long hole 7a and then retained by retaining means as appropriate.

As shown in Fig. 3, the rotation center C52 of the handle base 2 and the pushing member 5, a rotation center C53 of the pushing member 5 and the handle body 3, the connection pin 9 of the handle body 3, and the rotation center C72 of the operation link 7 with respect to the handle base 2 are disposed at vertex positions of a parallelogram. The long hole 7a has one end position (initial end position) that is a position of the connection pin 9 at the vertex position of the parallelogram, and extends in a rearward and slightly back surface direction, that is, in a direction in which a link length of the operation link 7 is extended by sliding of the connection pin 9.

As shown in Fig. 3, the operation link 7 is biased toward the initial corresponding position corresponding to the initial position of the handle body 3 by a torsion spring 10 wound around the rotation center C72 of the operation link 7 with the handle base 2, the torsion spring 8 that biases the pushing member 5 toward the initial corresponding position corresponding to the initial position of the handle body 3 is wound around the rotation center C52 of the pushing member 5 with respect to the handle base 2 as described above, and the torsion spring 10 biases the connection pin 9 toward the initial end position in the long hole 7a, that is, toward the vertex position of the parallelogram and holds the connection pin 9 at the position.

Therefore, in this example, when the electric actuator 1 is driven to rotate the cam 6 counterclockwise in Fig. 3 when the handle body 3 is at the initial position shown in Fig. 3, the pushing member 5 rotates clockwise about the rotation center C52.

As described above, since the operation link 7 and the handle body 3 are held, by actions of the torsion springs 10 and 8, at the initial corresponding position where the connection pin 9 minimizes the link length of the operation link 7, the pushing member 5, the operation link 7, the handle body 3, and the handle base 2 form a parallel crank mechanism having the handle base 2 as a fixed link, and the handle body 3 moves from the initial position to the pop-up position shown in Fig. 6(a) by the rotation of the pushing member 5 while holding a parallel posture.

When the handle body 3 reaches the pop-up position, the drive of the electric actuator 1 is stopped by a switch (not shown), and the handle body 3 is held at the pop-up position. When the electric actuator 1 is reversely driven from this state, the pushing member 5 returns to the initial corresponding position by the torsion spring 8 and the handle body 3 returns to the initial position.

At the pop-up position, the handle body 3 is held in a posture parallel to the door surface. Thereafter, by pulling out a rear end side of the hand body 3 to an outside of the door, the handle body 3 is rotated about the rotation center C53 with the pushing member 5 until the handle body 3 comes into contact with a stopper (not shown), and as shown in Fig. 6(b), the handle body 3 can be moved to a latch release position inclined from the front-end portion toward the rear end portion.

The rotation of the handle body 3 from the pop-up position to the latch release position is performed by a manual rotation operation, and in accordance with the rotation operation of the handle body 3 to the latch release position, the operation link 7 further rotates beyond the pop-up corresponding position corresponding to the pop-up position of the handle body 3 and rotates to a latch operation corresponding position.

In this example, an operation of the door latch device 4 is performed by operating the latch release lever 12 by the lever push member 11 fixed to the operation link 7.

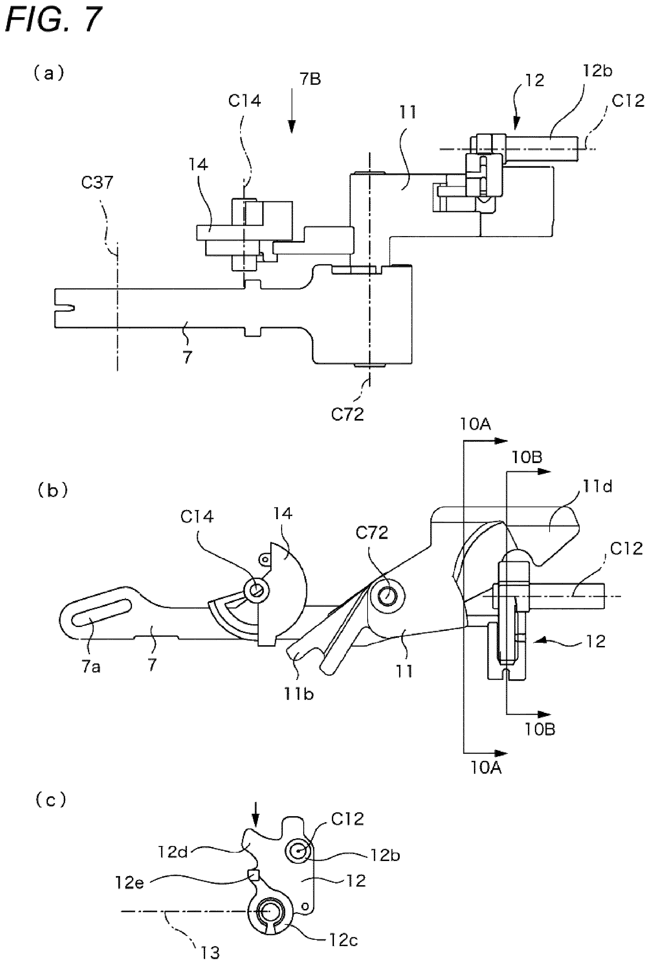

As shown in Figs. 7(a) and 7(b), the lever push member 11 is fixed on the rotation center C72 of the operation link 7 with the handle base 2, and rotates around the rotation center C72 in accordance with the rotation of the operation link 7.

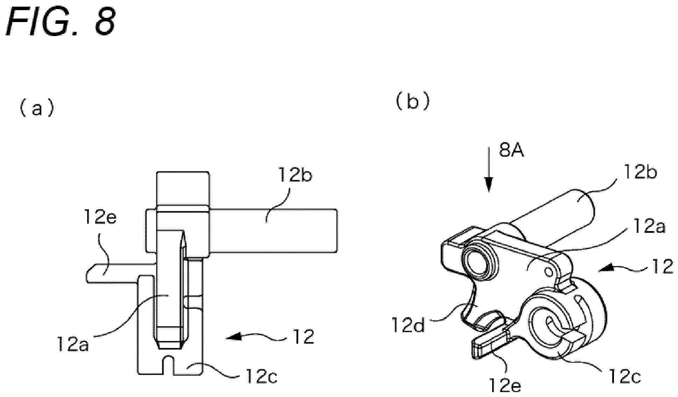

The latch release lever 12 is rotatably connected to the handle base 2 around a rotation center C12 perpendicular to the rotation center C72 of the operation link 7 with respect to the handle base 2. As shown in Figs. 8(a) and 8(b), the latch release lever 12 includes a plate-like body portion 12a, a cylindrical portion 12b through which a rotation shaft is inserted, the cylindrical portion 12b protruding from a plate-like body portion 12a, and a cable connecting portion 12c for holding a tip of an inner cable (not shown) of a cable device 13, the cable connecting portion 12c being formed near the cylindrical portion 12b.

The latch release lever 12 is biased clockwise in Fig. 7(c) by a torsion spring (not shown) wound around the rotation center C12, and is held at an initial position shown in Fig. 7(c).

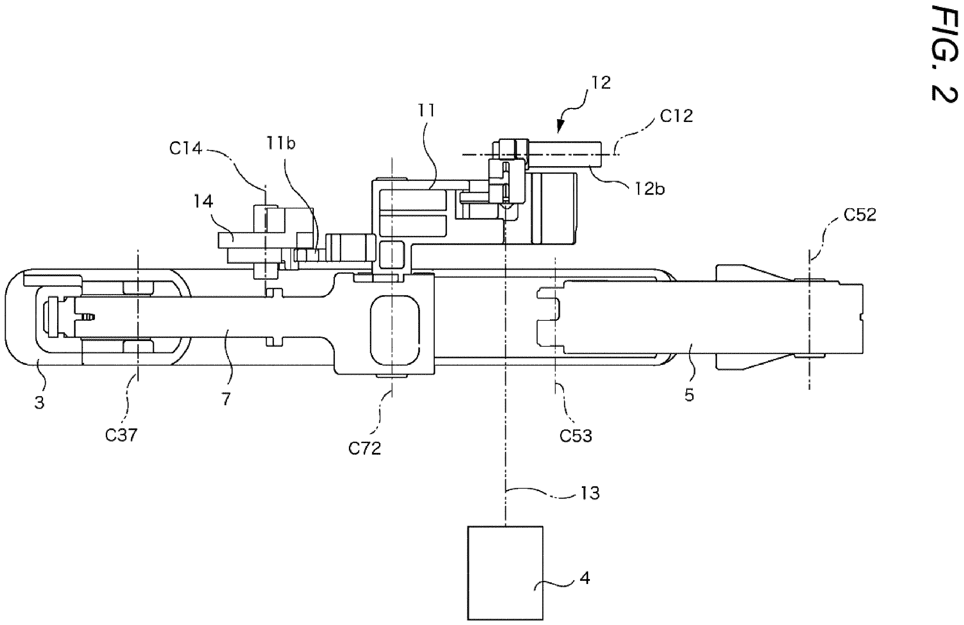

Further, the latch release lever 12 includes a pushed portion 12d. As will be described later, the pushed portion 12d is pushed by a lever push portion 11a of the lever push member 11, whereby the latch release lever 12 rotates counterclockwise in Fig. 7(c) to apply a pulling operation force to the cable device 13 and operate the door latch device 4 (see Fig. 2).

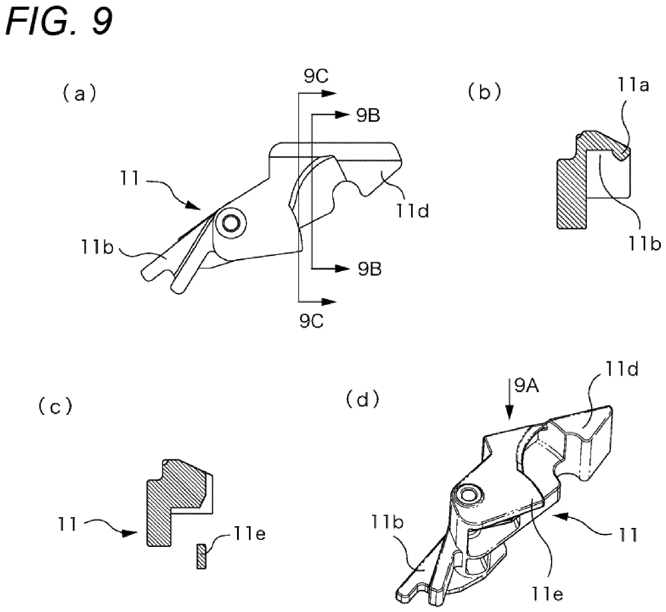

As shown in Figs. 9(a) to 9(d), the lever push member 11 includes a stopper piece 11b at one end portion and a recess 11c configured to receive the plate-like body portion 12a of the latch release lever 12 at the other end portion, and the lever push portion 11a is formed on a peripheral wall portion of the recess 11c.

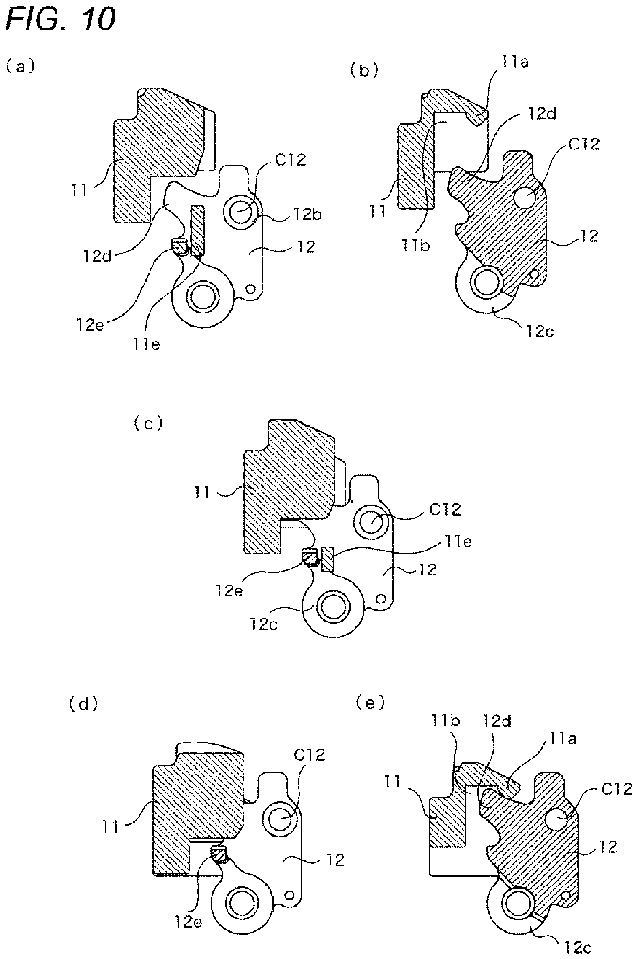

As described above, the lever push member 11 moves from a state shown in Fig. 10(b) to a state shown in Fig. 10(e) in accordance with the rotation of the operation link 7 to the pop-up corresponding position, and the lever push portion 11a comes into contact with the pushed portion 12d of the latch release lever 12. Thereafter, when the handle body 3 is operated to the latch operation position and the operation link 7 is rotated to an operation corresponding position, the lever push portion 11a of the lever push member 11 pushes the pushed portion 12d of the latch release lever 12, and the latch release lever 12 rotates around the rotation center to operate the door latch device 4.

Further, a weight portion 11d is formed near the lever push portion 11a of the lever push member 11 to adjust the moment of inertia of the lever push member 11. A value of the moment of inertia is set to such a magnitude that, when an impact force due to a collision is applied to the vehicle, an operation force generated in the lever push member 11 by inertia and directed toward a direction to operate the latch release lever 12 will be canceled by inertia and the rotation in the direction will not be generated. A weight of the weight portion 11d, an arm length from the rotation center C72, and the like are determined based on the moment of inertia required for the lever push member 11.

Therefore, in this example, even when a collision impact force is applied, the operation force generated in the lever push member 11 is canceled by the moment of inertia of the lever push member 11, and thus, the latch release lever 12 is not pushed and inadvertent door opening is prevented.

Further, the weight portion 11d is formed near the lever push portion 11a of the lever push member 11 to adjust the moment of inertia of the lever push member 11. The value of the moment of inertia is set to such the magnitude that the operation force in the direction of operating the latch release lever 12 is canceled by inertia and the rotation in the direction is not generated, the operation force being generated in the lever push member 11 by inertia when the impact force due to the collision is applied to the vehicle. The weight of the weight portion 11d, the arm length from the rotation center C72, and the like are determined based on the moment of inertia required for the lever push member 11.

Therefore, in this example, even when the collision impact force is applied, the operation force generated in the lever push member 11 is canceled by the moment of inertia of the lever push member 11, and thus, the latch release lever 12 is not pushed and the inadvertent door opening is prevented.

Further, the lever push member 11 is provided with a restriction wall 11e, and the latch release lever 12 is provided with a restriction protrusion 12e.

As shown in Figs. 8(a) and 8(b), the restriction protrusion 12e is erected from the plate-like body portion 12a, and the restriction wall lie is formed as a wall surface of the recess 11c as shown in Fig. 9(c).

As shown in Fig. 10(a), when the lever push member 11 is at the initial corresponding position, the rotation of the latch release lever 12 in a direction toward the latch release position, that is, counterclockwise rotation in Fig. 10(a) is impossible because the restriction wall 11e blocks a movement path of the restriction protrusion 12e, and it is possible to prevent the latch release lever 12 from moving independently to the latch release position due to an impact force such as a collision and from operating the door latch device 4.

The restriction of the rotation of the latch release lever 12 by the restriction wall lie continues even at an intermediate position between the initial corresponding position and the pop-up corresponding position of the lever push member 11 as shown in Fig. 10(c), and is eliminated when the lever push member 11 reaches the pop-up corresponding position as shown in Fig. 10(d). Thereafter, the latch release lever 12 can be rotated by pushing the pushed portion 12d by the lever push portion 11a of the lever push member 11.

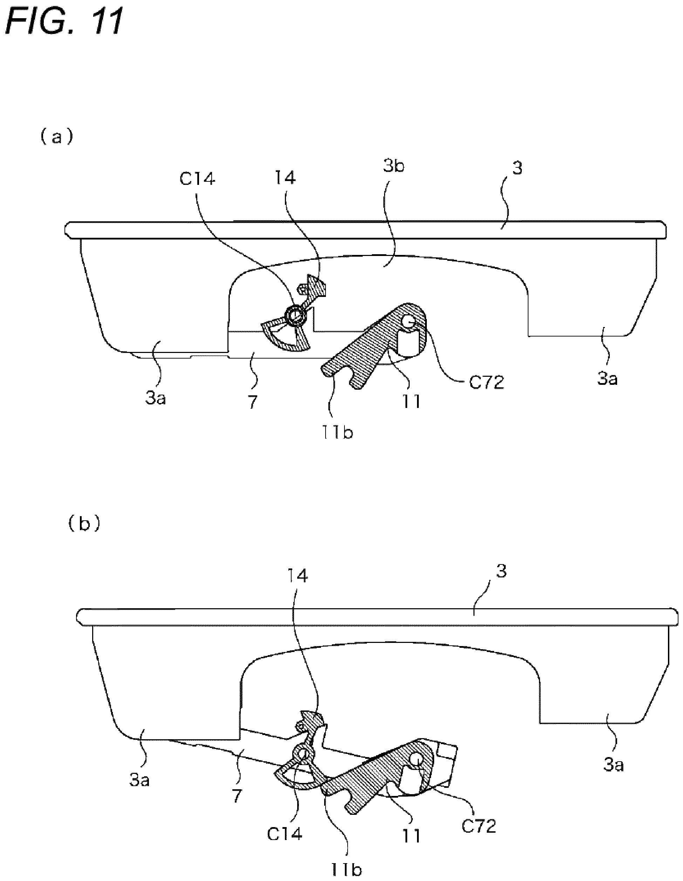

Further, an inertia stopper 14 for restricting the movement of the lever push member 11 when a collision load is applied to the vehicle is incorporated in the handle device. The inertia stopper 14 is rotatably connected to the handle base 2, rotates between a standby rotation position shown in Fig. 11(a) and a stop position shown in Fig. 11(c), and is biased toward the standby rotation position by a torsion spring (not shown) wound around the rotation center C14.

The inertia stopper 14 is formed as a cylindrical body whose gravity center position is set so as to move from the standby rotation position to the stop position by inertia when a collision force due to a collision is applied. As shown in Fig. 11(a), since a movement path (clockwise rotation around the rotation center C72 in Fig. 11(a)) of the stopper piece 11b of the lever push member 11 is opened at the standby rotation position, the rotation following an rotation operation of the operation link 7 to the latch operation corresponding position is allowed.

On the other hand, when a collision force from a side of the vehicle is applied to the vehicle, the inertia stopper 14 rotates from the standby rotation position to the stop position. As shown in Fig. 11(b), when the inertia stopper 14 is at the stop position, the inertia stopper 14 blocks the movement path of the stopper piece 11b of the lever push member 11, and thus the lever push member 11 stays at an interference position with the inertia stopper 14 without following the rotation of the operating link 7. Therefore, it is possible to reliably prevent the latch release lever 12 from operating and the door from being opened unnecessarily.

The present application is based on the Japanese patent application (Japanese Patent Application No. 2019-165090) filed on September 11, 2019, the contents of which are incorporated herein by reference.

### REFERENCE SIGNS LIST

1: electric actuator
2: handle base
3: handle body
4: door latch device
5: pushing member
6: cam
7: operation link

## Claims

1. A vehicular handle device, comprising:
a handle body;
a handle base;
a door latch device in a door;
an electric actuator; and
a pushing member,
wherein the handle body is configured to be driven by the electric actuator from an initial position, in which the handle body is accommodated in the handle base, to a pop-up position, and manually operated to a latch operation position beyond the pop-up position, thereby unlocking the door latch device in the door, and
wherein the pushing member is configured to be rotationally driven by the electric actuator and push an end of the handle body on a side where the electric actuator is arranged in a protruding direction from the handle base by an operation force in which an amount of change in a pushing amount is small at an initial stage of operation and the amount of change gradually increases at a later stage of the operation.

2. The vehicular handle device according to claim 1,
wherein one end of the pushing member is rotatably connected to the handle base, and the pushing member is configured to be rotationally driven by being pushed by a cam being rotationally driven by the electric actuator, and
wherein the cam is formed in a shape having a cam diagram in which an increase rate of a movement amount in the protruding direction of the other end of the pushing member per unit rotation angle of the cam, the other end of the pushing member being opposite to the one end of the pushing member connected to the handle base, is small at an initial stage of rotation of the cam and increases as the rotation proceeds to a later stage.

3. The vehicular handle device according to claim 2, further comprising:
an operation link,
wherein one end of the operation link is rotatably connected to one end of the handle body, and the other end of the operation link is rotatably connected to the handle base,
wherein the one end of the pushing member is rotatably connected to the handle base, and the other end of the pushing member is rotatably connected to the other end of the handle body, and
wherein the pushing member forms a link mechanism together with the operation link, the handle body, and the handle base.

4. The vehicular handle device according to claim 3,
wherein a rotation center of the cam is disposed near a normal line at a contact portion at which the cam and the pushing member contact each other when the pushing member is at a pop-up corresponding position corresponding to the pop-up position of the handle body.

5. The vehicular handle device according to claim 3 or 4,
wherein a connection portion between the operation link and the handle body has a sliding pair, and
wherein the handle body is configured to move from the pop-up position to the latch operation position by a rotation operation of the handle body about a rotation center of the handle body and the pushing member.
